# EUROPEAN PATENT APPLICATION

(11) **EP 1 123 650 A1**
(43) Date of publication of application: **16.08.2001**
(21) Application number: 01301147.3
(22) Date of filing: 09.02.2001
(51) Int. Cl.: A01G 27/04

(54) **Plant irrigation system**

(30) Priority: 11.02.2000 GB 0003229; 09.05.2000 GB 0011192
(71) Applicant: Sproule, Lin, Totnes, Devon, TQ9 7JN (GB)
(72) Inventor: Sproule, Lin, Totnes, Devon, TQ9 7JN (GB)
(74) Representative: Harrison, Ivor Stanley

(57) **Abstract**

An irrigation device for use with plant containers comprises: a reservoir (12), sealed except for at least one projecting conduit (13) which allows the drip-free filling of the reservoir; and at least one wicking means (14) which extends from the interior of the reservoir to the exterior of the reservoir where, in use, it comes into contact with plant growth medium, the device being capable of arrangement in use so as to allow drainage of the plant container (16) when the latter is watered by precipitation or other conventional means.

## Description

This invention relates to plant irrigation systems and in particular it relates to irrigation systems for use with plant containers.

The maintenance of optimal water levels in plant growth media is essential for the growth and aesthetic appeal of a planted specimen. During periods of low precipitation and in the case of indoor plants, the water content of the plant growth medium is primarily governed by the frequency at which the gardener administers stored water to the medium. If, for any reason, the gardener is unable to water the plants frequently and since the growth medium can only hold a finite amount of water before losses due to drainage occur, the loss of water from the medium by evaporation from the medium surface and transpiration via the plants will lead to sub-optimal levels of water being available for uptake by the plants. On the other hand, over-watering may be harmful to the plants and lead to spillage of water, which is wasteful and messy.

Previous attempts to overcome these problems have concentrated on the construction of novel plant containers incorporating water storage and delivery devices. For example, in GB1598198, the system described consists of a two-section pot, the lower section of which acts as a reservoir and the upper section as a holder for the growth medium. The contents of the two sections are prevented from coming into direct contact by a dividing wall but are able to communicate with each other via a perforated passage which traverses the dividing wall and contains a wick. The wick allows the passage of water from the lower section up into the growth medium, thus maintaining the water content of the latter. Such prior systems are limited, however, in that they are invariably rather complex and, being designed as all-in-one growth media holders and reservoirs, they are not adaptable by the gardener to his chosen shape and size of plant container. A further disadvantage is that, when the containers are used outdoors during periods of ample precipitation, the necessarily sealed bottoms of the growth medium-containing portions result in a lack of drainage, the outcome of which is waterlogging of the growth medium and damage to the roots of the plants.

Thus, the object of the present invention is to provide a water-conservative irrigation device which can be used with plant containers of a variety of different shapes and sizes and which allows for drainage of the contents of the plant container in the event of overwatering due to precipitation.

According to one aspect of the present invention there is provided an irrigation device for use with plant containers and comprising: a reservoir, sealed except for at least one projecting conduit which allows the drip-free filling of the reservoir; and at least one wicking means which extends from the interior of the reservoir to the exterior of the reservoir where, in use, it comes into contact with plant growth medium, the device being capable of arrangement in use so as to allow drainage of the plant container when the latter is watered by precipitation or other conventional means.

In a preferred embodiment, the irrigation device according to the present invention has a reservoir shaped substantially as an inverted dome such that the device can be seated inside a hemispherical hanging basket - type plant container. The at least one projecting conduit can optionally extend from the central portion of the top of the reservoir such that, in use, it rises through the bulk of the plant growth medium to exit at the top of the container, or from the periphery of the top of the reservoir such that, in use, it exits the container through the wall of the latter.

An alternative embodiment of the device has a flat lower reservoir surface incorporating outer projections which allow the device to sit in and allow the drainage of plant containers not limited to the hemispherical type. In a further alternative embodiment, the irrigation device has a reservoir with flat, parallel upper and lower surfaces such that the device can be placed outside and underneath a flat bottomed plant container and with its projecting conduit entering the container through the central drainage hole of the latter.

Preferably, the projecting conduits of the device are extendible over a range of lengths. This extension can optionally be achieved via a telescopic arrangement of several sections of tubing.

In certain embodiments the at least one projecting conduit forms an angle with the upper surface of the reservoir which is less than a right angle. The said angle is preferably between 20° and 70° from the horizontal upper surface of the reservoir. The inclination of the conduit in this way allows manual filling of the reservoir but inhibits both excess evaporation and overfilling due to precipitation.

Alternatively, or in addition, the at least one projecting conduit can be provided with a capping means. This allows the avoidance of evaporation and overfilling problems at any conduit angle and also prevents access of insects, molluscs, small mammals, seeds and other biological matter to the interior of the device. Advantageously, the capping means can be joined to a water level gauging means, such as a dipstick. The gauging means can be made of glass or a plastics material, and preferably includes at least one groove or serrations along its length and/or a material which changes its visual appearance when wet, to aid in the determination of the water level in the reservoir.

The device may be advantageously made from a plastics material, preferably a porous plastics material with similar porosity characteristics to earthenware material such as terracotta. Alternatively, terracotta or a polystyrene material could be used.

The wicking means may be arranged so that it leaves the interior of the reservoir along the or a conduit. If necessary, the projecting conduit can be made to contain a hole in its wall through which the wicking means can reach the growth medium. Alternatively, and preferably, the device can incorporate a second conduit adjacent the first conduit, possibly shorter than the latter, and intended to carry the wicking means rather than allowing filling.

As a further alternative, the device, if made of an appropriately porous material as described above, can be designed so that at least the conduit, and preferably the entire device, is self-wicking. This removes the need for the incorporation of a further wicking means.

According to a further aspect of the present invention there is provided a plant container incorporating an irrigation device comprising: a reservoir, sealed except for at least one projecting conduit which allows the drip-free filling of the reservoir; and a wicking means which extends from the interior of the reservoir, along the at least one conduit, to the exterior of the reservoir where, in use, it comes into contact with plant growth medium placed inside the container, the device being arranged so as to allow drainage of the container when the latter is watered by precipitation or other conventional means.

Embodiments of the present invention will now be described in detail by way of example only and with reference to the appended drawings, in which:
Fig. 1 shows, in cross section, an irrigation device according to the present invention in use inside a hanging basket-type container;
Fig. 2 shows, in cross section, part of a variant of the device of Figure 1;
Fig. 3 shows a cross section through a further irrigation device according to the present invention, in use outside and beneath a flat-bottomed plant container;
Fig. 4 shows, in cross section, an irrigation device in use inside a container other than one of the hemispherical type; and
Figure 5 shows a cross section through an irrigation device according to the invention and incorporating capping means with an attached water level gauging means.

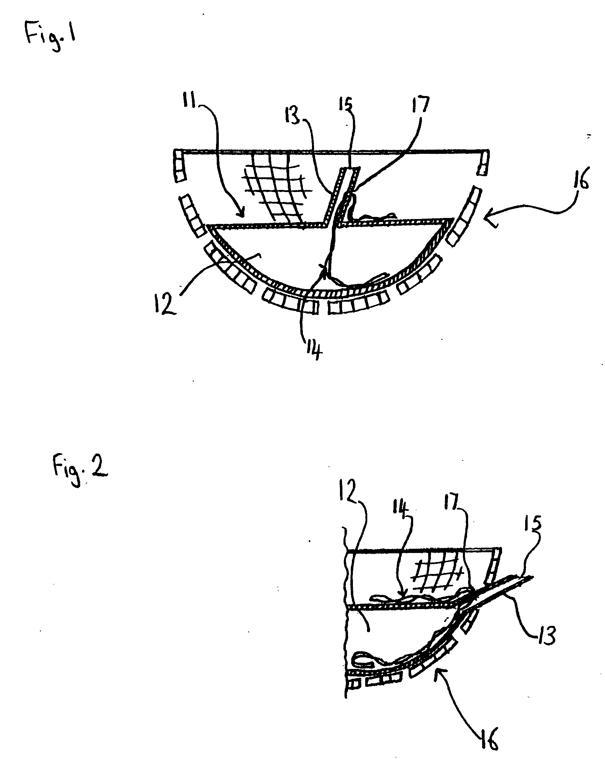

In Figure 1, the irrigation device generally indicated 11 consists of a reservoir 12, a projecting filling conduit 13 and a wick 14. The device 11 is sealed apart from the opening 15 at the end of the conduit 13, through which water is poured to fill the reservoir 12.

In use, the device 11 rests inside the base of a substantially hemispherical hanging basket-type container, indicated 16. Plant growth medium is loaded into the container 16, on top of the reservoir 12 and around the conduit 13 so that the opening 15 is above the level of the growth medium. The wick 14, which exits the conduit through the hole 17, is arranged so that it achieves contact with as much of the growth medium as possible. Water in the reservoir 12 is thus transferred via the wick 14 into the growth medium by capillary action, the result of which is optimal watering of the growth medium as long as water is still available in the reservoir 12.

When the device 11 is used with an indoor plant container, the filling of the reservoir 12 using the opening 15 of the conduit 13 has the advantage that no spillage of water onto indoor surfaces should occur. Depending on its size, a full reservoir 12 can water the plant growth medium for several days. Another advantage of the embodiment shown in Figure 1 is that the entire device 11 will be largely inconspicuous when in use.

When the device 11 is used in an outdoor plant container, the watering of the growth medium from above by precipitation or other conventional means (e.g. watering can) by a route other than the conduit 13 will result in a surplus amount of water accumulating in the growth medium. A particular advantage of the device 11 is that it allows this surplus water to drain out of the medium along a path around the outside of the reservoir 12.

As shown by Figures 1 and 2, the lower end of the conduit 13 can be arranged to terminate towards the centre or at the periphery of the upper surface of the reservoir 12. In the latter case, the conduit 13 can be conveniently made to pass through the wall of the container 16, so that the open end 15 is accessible from the side rather than from above. In the particular embodiment shown by Figure 2, it is clear that the wick 14 has to leave the conduit 13 through a hole 17 significantly removed from the opening 15 in order not to protrude outside the container 16, the result of which could be excessive evaporation of the reservoir water.

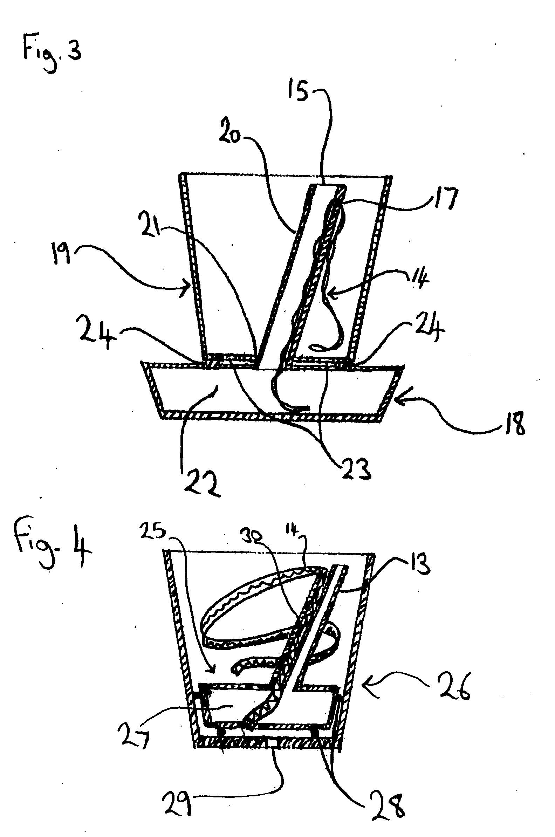

In Figure 3, the irrigation device 18 is designed to be placed outside and underneath a flat-bottomed plant container, indicated 19. The filling conduit 20 projects through the central drainage hole 21 of the plant container 19 and, when in use, extends to a level above that of the growth medium. Filling of the reservoir 22 and consequent transfer of water to the growth medium are achieved as described above. On occasions when this embodiment of the present invention is used outside and surplus water is accumulated in the growth medium following precipitation, drainage can still be achieved either through the central hole 21 of the container 19, or through the peripheral holes 23 common in such containers. It is also possible to incorporate one or more upward projections 24 into the upper surface of the reservoir 22, such that the bottom of the container 19 is held spaced apart from the said upper surface, thus aiding drainage of surplus water.

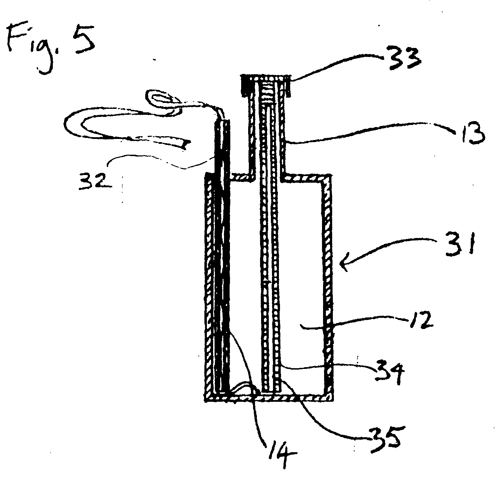

In Figure 4, a device 25 is shown in use inside a non-hemispherical container 26. The reservoir 27 has a flat lower surface and incorporates outer projections 28 which allow for drainage of water out of the container 26 through the drainage hole 29. In this particular embodiment, the device has a second conduit 30 adjacent to the first conduit 13. The second conduit 30 is shorter than the first conduit 13 and is primarily designed to carry the wick 14.

An alternative embodiment of the irrigation device is shown as 31 in Figure 5. Here the projecting conduit 13 forms a right angle with the upper surface of the reservoir 12 and is covered with a cap 33. Adjoining the cap is a dipstick 34 which dips into the interior of the reservoir 12 such that the level of the water is revealed by its level of passage along the groove 35 of the dipstick 34. The dipstick could also reveal the water level if it were transversely serrated and likewise if it contained a material whose colour or shade changed on contact with water. In the embodiment 31, the wick 14 leaves the reservoir 12 through a small hole in a second conduit 32 which can be in any position on the top or sides of the reservoir 12. The cap 33 and small hole in the second conduit 32 ensure that no organic matter, living or dead, can gain access to the reservoir 12. It would be advisable to use the cap and dipstick on all irrigation systems described herein.

The conduit or conduits of any embodiment of the present invention may be of adjustable length. This adjustability may be achieved by the use of several shorter sections of conduit material which are slidably connected in a telescopic series arrangement. By varying the length of the conduits, it is possible to make them less conspicuous yet, when required, fully accessible for the filling of the device. The adjustability may also aid the distribution of the wick throughout the growth medium when larger containers are used.

## Claims

1. An irrigation device for use with plant containers and comprising: a reservoir, sealed except for at least one projecting conduit which allows the drip-free filling of the reservoir; and at least one wicking means which extends from the interior of the reservoir to the exterior of the reservoir where, in use, it comes into contact with plant growth medium, the device being capable of arrangement in use so as to allow drainage of the plant container when the latter is watered by precipitation or other conventional means.

2. An irrigation device according to claim 1 in which the reservoir is shaped substantially as an inverted dome such that the device can be seated inside a hemispherical hanging basket - type plant container.

3. An irrigation device according to claim 1 in which the reservoir has a flat lower surface incorporating outer projections which allow the device to sit in and allow the drainage of plant containers not limited to the hemispherical type.

4. An irrigation device according to claim 1 in which the reservoir has flat, parallel upper and lower surfaces such that the device can be placed outside and underneath a flat bottomed plant container and with its projecting conduit entering the container through the central drainage hole of the latter.

5. An irrigation device according to any preceding claim in which the at least one projecting conduit extends from the central portion of the top of the reservoir such that, in use, it rises through the bulk of the plant growth medium to exit at the top of the container.

6. An irrigation device according to any of claims 1 to 3, in which the at least one projecting conduit extends from the periphery of the top of the reservoir such that, in use, it exits the container through the wall of the latter

7. An irrigation device according to any preceding claim in which the at least one projecting conduit is extendible over a range of lengths.

8. An irrigation device according to claim 7 in which the extension is achieved via a telescopic arrangement of several shorter sections of conduit material.

9. An irrigation device according to any preceding claim in which the at least one projecting conduit is provided with a capping means.

10. An irrigation device according to claim 9 in which the capping means is joined to a water level gauging means.

11. An irrigation device according to any preceding claim and made from terracotta, a polystyrene material, or a porous plastics material with similar porosity characteristics to earthenware material.

12. An irrigation device according to any preceding claim in which the wicking means is arranged so that it leaves the interior of the reservoir along the or a conduit.

13. An irrigation device according to any preceding claim in which the device incorporates a second conduit adjacent the first conduit and which carries the wicking means.

14. An irrigation device according to any preceding claim and made from porous material which enables at least the conduit to be self-wicking.

15. An irrigation device according to claim 14 in which the entire device is self-wicking.

16. A plant container incorporating an irrigation device comprising: a reservoir, sealed except for at least one projecting conduit which allows the drip-free filling of the reservoir; and a wicking means which extends from the interior of the reservoir, along the at least one conduit, to the exterior of the reservoir where, in use, it comes into contact with plant growth medium placed inside the container, the device being arranged so as to allow drainage of the container when the latter is watered by precipitation or other conventional means.
